# EUROPÄISCHE PATENTSCHRIFT

(11) **EP 2 946 046 B1**
(45) Veröffentlichungstag und Bekanntmachung des Hinweises auf die Patenterteilung: **16.05.2018**
(21) Anmeldenummer: 13795156.2
(22) Anmeldetag: 29.10.2013
(51) Int. Cl.: E04F 13/08, E04B 1/76, C09J 5/08

(54) **DÄMMSYSTEM FÜR DIE WÄRMEDÄMMUNG EINER WAND**
INSULATING SYSTEM FOR THE THERMAL INSULATION OF A WALL
SYSTÈME D'ISOLATION POUR L'ISOLATION THERMIQUE D'UN MUR

(30) Priorität: 30.10.2012 DE 102012021188; 21.11.2012 DE 102012022668
(43) Veröffentlichungstag der Anmeldung: 25.11.2015
(73) Patentinhaber: Krechting, Andreas, 48624 Schöppingen (DE)
(72) Erfinder: MARUSCHKE, Dieter, 48624 Schöppingen (DE)
(74) Vertreter: Behrendt, Arne
(86) Internationale Anmeldenummer: PCT/EP2013/003260
(87) Internationale Veröffentlichungsnummer: WO 2014/067653

(56) Entgegenhaltungen:
- EP-A2- 2 028 327
- DE-A1- 2 145 521
- DE-A1- 19 745 364
- DE-A1-102009 022 799
- DE-U1-202008 016 581
- DE-U1-202010 005 086

## Beschreibung

Die Erfindung betrifft ein Dämmsystem für die Wärmedämmung einer Wand oder Decke im Innen- oder Außenbereich von bestehenden oder neuen Gebäuden mit mindestens einer Dämmplatte, die durch Ortschaum mit dem Untergrund verklebt ist, wobei zwischen dem Untergrund und der Dämmplatte mindestens eine Fixierhilfe vorgesehen ist, deren Körper an seiner dem Untergrund zugewandten Unterseite mit einer am Untergrund haftenden Klebeschicht und an seiner der Dämmplatte zugewandten Oberseite mit einer an der Dämmplatte haftenden Klebeschicht beschichtet ist, und wobei die Fixierhilfe die Dämmplatte zumindest für die Dauer des Aushärtens des Ortschaums mit Abstand zum Untergrund fixiert.

Ein derartiges Dämmsystem ist beispielsweise aus der JP 2006274654 A bekannt. Bei diesem nach dem Stand der Technik bekannten Dämmsystem sind die die Fixierhilfen bildenden Körper als starre Klötze oder Leisten ausgebildet, die beispielsweise aus PP oder PET bestehen. Die Verwendung solcher starrer Klötze oder Leisten als Fixierhilfe hat den Nachteil, dass der jeweilige Abstand zwischen der Dämmplatte und dem Untergrund durch die Dicke der Klötze oder Leisten vorgegeben ist und im Wesentlichen unveränderlich bleibt. Wenn also der Untergrund nicht vollständig eben ist, besteht also die Gefahr, dass auch die Sichtfläche der fertig verlegten Dämmplatten uneben wird.

Um das zu vermeiden, sind beispielsweise aus der EP 1 640 521 B1 oder der DE 10 2010 005 444 B4 Dämmsysteme bekannt, bei denen der Abstand zwischen den Dämmplatten und dem Untergrund beim Verkleben der Dämmplatten einstellbar ist, so dass im Ergebnis immer eine vollständig ebene Sichtfläche der Dämmplatten erreicht werden kann.

Die bei diesen bekannten Dämmsystemen verwendeten Fixierhilfen haben jeweils eine Grundplatte, die z. B. durch Kleben mit dem Untergrund verklebt und mit Haltemitteln versehen ist, die orthogonal zu dieser Grundplatte verlaufen und an denen die Dämmplatte form- und/oder kraftschlüssig mit einstellbarem Abstand vom Untergrund festlegbar ist. Die dabei aufzubringenden Haltekräfte müssen ausreichen, die Dämmplatte während des Aushärtens des zwischen Dämmplatte und Untergrund eingebrachten Ortschaumes in Position zu halten. Um diese Haltekräfte gering zu halten, verwendet man für den Ortschaum einen PU-Schaum oder andere Klebeschäume, die möglichst wenig nachexpandieren. Solche Klebeschäume sind aber auch empfindlich gegen nachträgliches Ausrichten der Dämmplatten relativ zum Untergrund, weil diese Klebeschäume durch das Verschieben leicht zerstört werden können. Besonders schädlich ist es, wenn die Dämmplatte beim Ausrichten zu weit gegen den Untergrund angedrückt wird und anschließend wieder vom Untergrund abgezogen werden muss. Der bereits zusammengedrückte Klebeschaum verliert nämlich insbesondere durch Zugbelastung seinen inneren Zusammenhalt, so dass es zu Schäden in der Schaumklebeschicht kommt. Es kommt daher darauf an, die Dämmplatte beim Einbau möglichst schnell in die gewünschte richtige Einbauposition zu bringen.

Die EP 1 640 521 B1 schlägt als Haltemittel für die Dämmplatten einen senkrecht zur Grundplatte der Fixierhilfe verlaufenden Schenkel vor, der die Dämmplatte an ihrem Rand umgreift und mit einer Reihe von Einstecköffnungen für Fixierstifte versehen ist, die parallel zur Dämmplattenebene in das Material der Dämmplatte eingesteckt werden und somit die Dämmplatte in dem jeweils eingestellten Abstand vom Untergrund formschlüssig an dem Schenkel fixieren. Diese Ausgestaltung der Haltemittel hat den Nachteil, dass die einzelnen Fixierhilfen immer nur am Rand der einzubauenden Dämmplatte angeordnet werden können, unabhängig davon, ob der Untergrund in diesem Bereich gerade für die Anbringung der Fixierhilfe geeignet ist oder nicht. Außerdem müssen im Randbereich der Dämmplatten Ausnehmungen vorgesehen sein, um Raum für die Halteschenkel zu schaffen. Außerdem ist das Einstecken der Fixierstifte umständlich und arbeitsaufwändig, insbesondere wenn wegen des Klebeschaums mit Schutzhandschuhen gearbeitet werden muss. Eine weitere Schwierigkeit ergibt sich, wenn aufgrund der jeweiligen Einbauposition der Dämmplatte der Blick auf die Oberkante der Dämmplatte nicht möglich ist, z. B. weil die Oberkante über der Augenhöhe oder hinter einem Gerüstteil verdeckt liegt. In diesem Fall müssen die Fixierstifte nach Gefühl in die Oberkante der Dämmplatte eingesteckt werden, was natürlich zu fehlerhaften Einbaupositionen führen kann, d. h. zu Fehlern, die nachträglich nur mit großem Aufwand beseitigt werden können.

Die DE 10 2010 005 444 schlägt als Haltemittel für die Dämmplatten angespitzte Stifte vor, die an der mit dem Untergrund verklebten Grundplatte der Fixierhilfe verbunden sind, in Richtung auf die einzubauende Dämmplatte vorstehen und mehr oder weniger tief von der Rückseite her in das Material der Dämmplatte eingestochen werden. Diese mehr oder weniger tief eingestochenen Stifte halten durch Reibungsschluss die Dämmplatte in Position. Diese Art der Fixierung hat allerdings den Nachteil, dass die in das Plattenmaterial eindringenden angespritzten Stifte jede Korrekturbewegung der Dämmplatte parallel zum Untergrund während des Einbauvorgangs unmöglich machen. Werden solche Korrekturbewegungen während des Einbauvorgangs erzwungen, so besteht die Gefahr, dass der erforderliche Reibungsschluss zwischen dem Plattenmaterial und den Stiften derart gestört wird, dass die verbleibenden Reibungskräfte zwischen dem Plattenmaterial und den Stiften nicht mehr ausreichen, die Dämmplatte senkrecht zum Untergrund in Position zu halten.

Ein von der Funktion her ähnliches Dämmsystem ist aus der DE 20 2008 016 518 U1 bekannt. Dort werden zur Fixierung der Dämmplatten quaderförmige Körper verwendet, die mit dem Untergrund verklebt werden, in dazu passende Ausnehmungen in der Dämmplatte mehr oder weniger tief eingeschoben werden und dort durch Reibungsschluss fixiert werden. Zur Erzielung eines für die Fixierung ausreichenden Reibungsschlusses werden dabei die aneinander anliegenden Seitenwände der quaderfarbigen Fixierelemente und der Ausnehmungen in der Dämmplatte mehr oder weniger elastisch verformt. Auch dieses dem System hat den Nachteil, dass nachträgliche Lagekorrekturen der Dämmplatte parallel zum Untergrund erschwert werden. Außerdem müssen die Dämmplatten mit zu den Fixierelementen passenden Ausnehmungen versehen werden oder von vornherein mit solchen Ausnehmungen versehen sein. Schließlich können die Fixierelemente nur an Stellen platziert werden, an denen sich passende Ausnehmungen in der Dämmplatte befinden.

Es ist deshalb Aufgabe der Erfindung, die Fixierhilfen des Dämmsystems der eingangs genannten Art dahingehend weiterzubilden, dass sie jeweils im von der Dämmplatte abgedeckten Flächenbereich derart angebracht werden können, dass während des Einbauvorgangs das Ausrichten der Dämmplatte in Bezug auf den Untergrund sowohl senkrecht als auch parallel zum Untergrund erleichtert wird. Außerdem soll die Fixierhilfe natürlich kostengünstig herstellbar sein.

Zur Lösung dieser Aufgabe schlägt die Erfindung ausgehend von einem Dämmsystem der eingangs genannten Art vor, dass der Körper der Fixierhilfe zur Einstellung des Abstands zwischen Dämmplatte und Untergrund bleibend zusammendrückbar ausgebildet ist.

Unter einem bleibend zusammendrückbaren Körper wird hier ein Körper verstanden, der durch die beim Einbauen und Ausrichten der Dämmplatte auf ihn einwirkenden Kräfte verformt werden kann und danach die durch das Zusammendrücken und Ausrichten eingenommene Form im Wesentlichen beibehält. Er darf also die am Ende der Ausrichtung der Dämmplatte eingenommene Form durch auf ihn einwirkende Kräfte nicht wieder verlieren, und zwar weder durch elastische Rückstellkräfte seines Materials noch durch Rückstellkräfte, die durch eine Nachexpansion des Klebeschaums oder durch das Eigengewicht der Dämmplatte verursacht sind.

Für einen derart bleibend verformbaren Körper sind natürlich verschiedene Ausführungsformen denkbar. Eine vorteilhafte Ausführungsform der Erfindung sieht vor, dass der Körper der Fixierhilfe als Hohlkörper ausgebildet ist, dessen Wand aus bleibend verformbarem Material besteht. Als Material kommen hier in erster Linie Metalle oder Kunststoffe in Frage, die kalt plastisch verformbar sind und ein möglichst geringes elastisches Rückstellvermögen haben. In Frage kommt z. B. ein Blech aus reinem Eisen (Weicheisen) oder anderen Metallen mit entsprechenden Eigenschaften.

Als besonders geeignet haben sich Hohlkörper aus weichgeglühten Metallen, insbesondere aus weichgeglühtem Aluminium erwiesen.

Die Wand eines solchen Hohlkörpers hat zweckmäßig eine Wandstärke von 0,2 mm bis 2 mm, insbesondere von 0,5 bis 1 mm. Solche relativ dünnwandigen Körper lassen sich einerseits leicht verformen und haben aufgrund ihrer geringen Wandstärke nur ein sehr geringes elastisches Rückstellvermögen.

Eine besonders gute Formbeständigkeit im oben erläuterten Sinne haben solche Hohlkörper, wenn die bleibend verformbaren Wände des Hohlkörpers zumindest im Bereich der Klebeschichten nach außen gewölbt ausgebildet sind. Die derart gewölbt ausgebildeten Klebeflächen drücken sich nämlich beim Zusammendrücken des Körpers platt, so dass Klebekontaktflächen entstehen, die mit zunehmender Kompression des Hohlkörpers größer werden und sich bei der Rückverformung des Hohlkörpers wieder ablösen müssten. Da aber die Klebekräfte im Bereich der Klebekontaktflächen erheblich größer sind, als die möglichen Rückstellkräfte, verbleibt der komprimierte Hohlkörper in der komprimierten Form, auch wenn elastische Rückstellkräfte oder auch die durch die Nachexpansion des Klebeschaums oder das Gewicht der Dämmplatten verursachten Rückstellkräfte versuchen, den komprimierten Körper wieder auseinanderzuziehen.

Zweckmäßig sind die die Fixierhilfen bildenden Hohlkörper als Hülsen ausgebildet, deren Achsen im eingebauten Zustand der Hülsen parallel zum Untergrund bzw. der Dämmplattenebene verlaufen. Die Klebeschichten dieser Hülsen kommen während des Einbauvorgangs der Dämmplatten durch Zusammendrücken der Hülse fortschreitend mit dem Untergrund der Dämmplatte in Kontakt, wobei die Klebeflächen in Umfangsrichtung der Hülse umso größer werden, je weiter die Hülse zusammengedrückt wird und in den Kontaktbereichen plattgedrückt worden ist. Aus diesem Grund kann die Dämmplatte nur dann wieder vom Untergrund abgehoben werden, wenn die durch das Andrücken entstandenen Klebekontaktflächen wieder kleiner werden. Das heißt im Ergebnis, dass der durch Zusammendrücken der Hülse eingestellte Abstand zum Untergrund der Dämmplatte mit ausreichender Genauigkeit beibehalten wird. Dabei ist der insgesamt mögliche Verstellweg zwischen Dämmplatte und Untergrund geringfügig kleiner, als der Hülsendurchmesser.

Zudem kann die Dämmplatte während des Zusammendrückens der Hülse auch um ein gewisses Maß parallel zum Untergrund verschoben werden, beispielsweise um an eine benachbarte, schon installierte Dämmplatte herangeschoben zu werden. Auch diese parallelen Verschiebebewegungen werden am Ende des Verschiebevorgangs durch den oben geschilderten Klebemechanismus im Zusammenwirken mit der Verformung der Hülse ausreichend stabil fixiert. Hierdurch wird es möglich, während des Einbauvorgangs kleine Lücken zwischen benachbarten Dämmplatten zu schließen.

Der Querschnitt der Hülse im noch nicht verformten Zustand ist zweckmäßig kreisförmig, kann aber auch oval oder linsenförmig ausgebildet sein. Wichtig ist, dass auf jeden Fall die Klebeflächen zum Untergrund und zur Dämmplatte hin zunächst konkav gewölbt sind, damit Klebeflächen entstehen, die mit dem Zusammendrücken der Hülse größer werden. Anstelle von gewölbten Formen kommen natürlich auch vieleckige Formen in Frage, die an solche gewölbten Formen angenähert sind.

Alternativ kann der die Fixierhilfe bildende Hohlkörper auch die Form einer Kugel oder eines Kissens haben. Damit eine solche Kugel oder ein solches Kissen auch zusammengedrückt werden kann, ohne dass die eingeschlossene Luft komprimiert werden müsste, sind diese Kugeln oder Kissen seitlich mit Luftaustrittsöffnungen versehen.

Anstelle von Hohlkörpern können die als Fixierhilfe dienenden bleibend zusammendrückbaren Körper auch aus einem bleibend zusammendrückbaren Schaumstoff bestehen. In diesem Fall kann der bleibend verformbare Körper eine beliebige Gestalt haben, allerdings nur dann, wenn sichergestellt ist, dass der Schaumstoff nach der Kompression nicht wieder expandieren kann. In Frage kommen hier insbesondere offenporige Schäume mit entsprechenden Eigenschaften.

Der Abstand zwischen den beiden Klebeschichten beträgt zweckmäßig 2 bis 6 cm, insbesondere von 3 bis 5 cm. Mit diesen Abmessungen kann man die beim Verlegen von Dämmplatten üblichen Abstände zwischen Dämmplatte und Untergrund einstellen.

Weiterhin ist vorgesehen, dass die Klebeschichten als 0,2 bis 2 mm dicke Gelklebeschichten ausgebildet sind und jeweils durch eine abziehbare Schutzfolie abgedeckt sind. Gelkleber, deren chemische Zusammensetzung natürlich auf die miteinander zu verklebenden Materialien abgestimmt sein muss, können auf diese Art und Weise in ausreichender Schichtdicke vorgesehen werden und haben eine ausgesprochen große Klebekraft, ohne zur Herstellung des Klebekontakts heftig angedrückt werden zu müssen. Auf diese Weise wird sichergestellt, dass die erforderlichen Klebekontakte zwischen der Fixierhilfe und Untergrund einerseits und Dämmplatte andererseits schon mit verhältnismäßig geringem Andruck hergestellt werden können, aber nur schwer wieder abgelöst werden können, was - wie bereits oben ausgeführt - für die bleibende Verformung der als Fixierhilfe verwendeten Körper wichtig ist.

Aus Kostengründen kann es zweckmäßig sein, die Gelkleberschicht im Kontaktbereich mit dem Untergrund dicker auszuführen, als im Kontaktbereich mit der Dämmplatte. Damit wird sichergestellt, dass die Hülse auf jeden Fall an beliebigen Oberflächen des Untergrunds, z. B. an Putz, gut haftet, im Kontaktbereich mit der Dämmplatte, die eine glatte Oberfläche hat, aber Klebstoff eingespart wird.

Um die Rückverformung der Fixierhilfe nach ihrem Einbau noch besser zu verhindern, kann schließlich noch vorgesehen sein, dass die Klebeschichten den Hohlkörper der Fixierhilfe ringsum umgeben und dass in diese den Körper umgebenden Klebeschichten mindestens ein den Körper umgebender, unelastischer Metalldraht eingebettet ist. Wenn der Hohlkörper bei Verwendung der Fixierhilfe verformt wird, verlagert sich der den Hohlkörper umgebende unelastische Metalldraht in der Klebeschicht, wird von dem Klebstoff in dieser Lage fixiert und hindert den Hohlkörper an einer Rückverformung. Dieser Effekt kann ggf. noch dadurch gesteigert werden, dass der unelastische Metalldraht in den Verformungsbereichen gerafft ausgeführt ist.

Gegenstand der Erfindung ist weiterhin ein Verfahren zur Herstellung eines Dämmsystems mit mindestens einer Dämmplatte unter Verwendung von mindestens einer Fixierhilfe der eingangs geschilderten Art, wobei sich dieses Verfahren dadurch kennzeichnet, dass auf den Untergrund und/oder die Rückseite der zu verklebenden Dämmplatte eine zur Verklebung ausreichende Menge Ortschaum aufgetragen wird, dass an dem Untergrund und/oder der Rückseite der zu verklebenden Dämmplatte mindestens eine Fixierhilfe angebracht wird und dass anschließend die Dämmplatte unter Kompression der Fixierhilfe und unter Ausrichtung in die Einbaulage gegen den Untergrund angedrückt wird und in dieser Position belassen wird, bis der Ortschaum ausgehärtet ist.

Bei Verwendung von Fixierhilfen in Hülsenform sieht eine besonders vorteilhafte Weiterbildung des Verfahrens gemäß der Erfindung zusätzlich noch vor, dass die Fixierhilfen in einer solchen Position zwischen Untergrund und Dämmplatte angeordnet werden, dass die Achsen der Hülsen quer zur beabsichtigten Parallelverschieberichtung zwischen Dämmplatte und Untergrund verlaufen. Hierdurch ist es möglich, die Fixierhilfe so anzuordnen, dass die Dämmplatte beim Einbau mühelos um ein gewisses Maß an eine benachbarte Dämmplatte herangeschoben werden kann. Auf diese Weise wird der aufeinanderfolgende und lückenlose Einbau von Dämmplatten außerordentlich erleichtert und die Anzahl der benötigten Fixierhilfen gering gehalten.

Ausführungsbeispiele der Erfindung werden im Folgenden anhand der Zeichnung näher erläutert. Es zeigen:
- Fig. 1:: Perspektivisch eine Fixierhilfe gemäß der Erfindung im noch unverformten Zustand;
- Fig. 2:: die in Figur 1 dargestellte Fixierhilfe in einer Stirnansicht;
- Fig. 3:: in Stirnansicht eine abgewandelte Ausführungsform einer Fixierhilfe gemäß der Erfindung;
- Fig. 4:: schematisch die Fixierhilfe gemäß Figur 3 im zusammengedrückten Einbauzustand zwischen Untergrund und Dämmplatte;
- Fig. 5:: die Anbringung von Fixierhilfen gemäß der Erfindung auf einer Dämmplatte mit randseitiger Nut- Federverbindung;
- Fig. 6:: die Anbringung von Fixierhilfen gemäß der Erfindung an einer Dämmplatte mit glatten Rändern;
- Fig. 7:: schematisch im Schnitt ein Dämmsystem gemäß der Erfindung im Bereich von aneinanderstoßenden Dämmplatten mit randseitiger Nut/Feder-Verbindung.
- Fig. 8:: schematisch im Schnitt eine Fixierhilfe in Form einer Hohlkugel vor und nach der Verformung;
- Fig. 9:: schematisch im Schnitt eine Fixierhilfe gemäß der Erfindung in Form eines Schaumstoffkissens vor und nach der Verformung;
- Fig. 10:: eine Fixierhilfe gemäß den Figuren 1 und 2 mit eingebettetem Metalldraht in Stirnansicht.

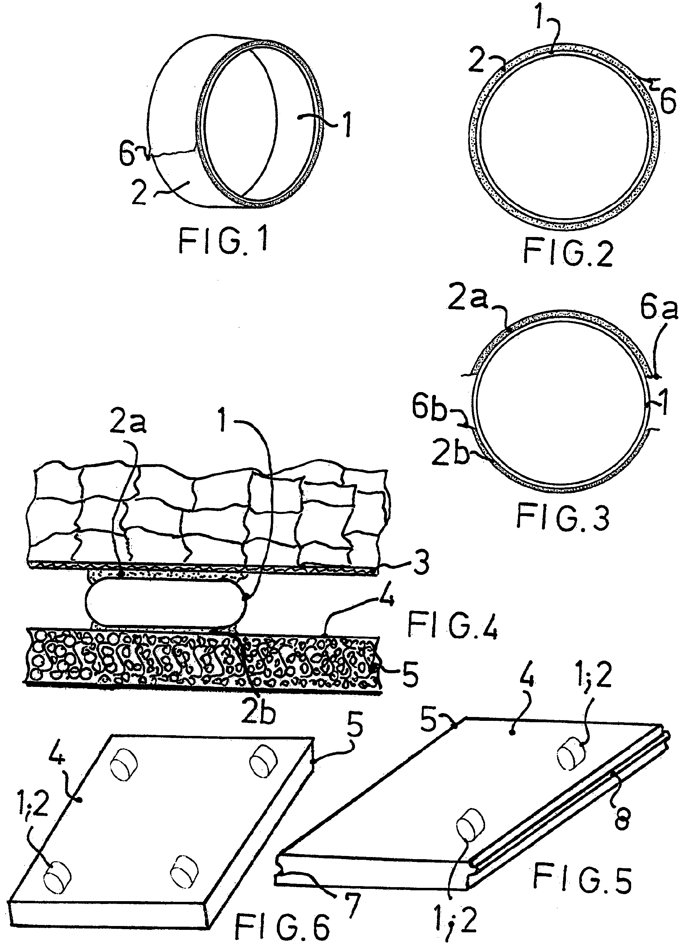

Die aus den Figuren 1 bis 7 Zeichnung hervorgehenden Fixierhilfen gemäß der Erfindung bestehen jeweils aus einer zylindermantelförmigen Hülse 1 aus kalt verformbaren Material mit möglichst geringem elastischen Rückstellvermögen, z. B. aus Metall oder Kunststoff, mit einer Wandstärke von z. B. 0,8 mm, einem Durchmesser von z. B. 40 mm und einer axialen Länge von z. B. 15 mm.

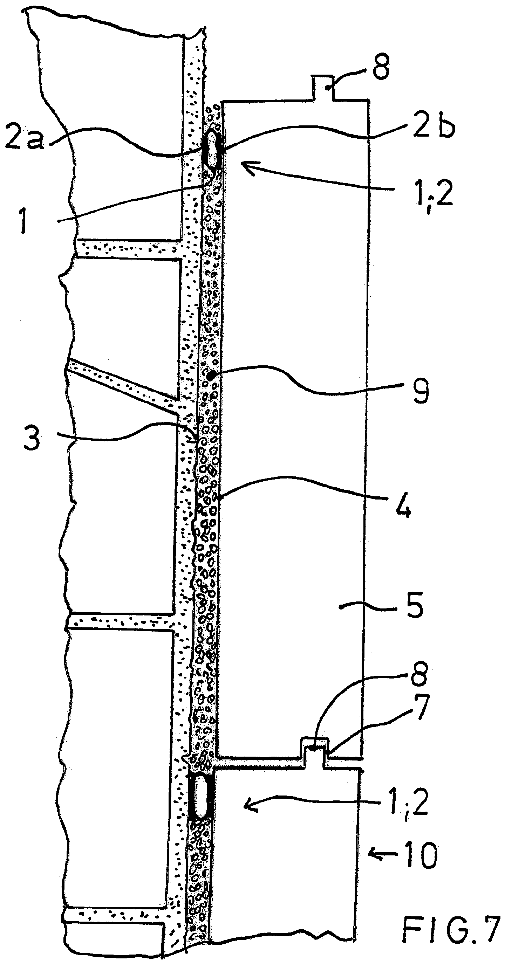

Diese Hülse 1 ist an ihrer Außenseite mit einer Klebeschicht 2 z. B. aus einem Gelkleber beschichtet, mit welcher sie einerseits mit einem Untergrund 3 (vgl. Figuren 4 und 7), z. B. der Oberfläche der zu dämmenden Wand einerseits und der Oberfläche 4 der zu fixierenden Dämmplatte 5 andererseits verklebt werden kann.

Die Klebeschicht 2 ist bei noch unverformter Fixierhilfe von einer abziehbaren Schutzfolie 6 abgedeckt. Die Klebeschicht 2 und die Schutzfolie 6 können sich, wie aus den Figuren 1 und 2 hervorgeht, über den gesamten Außenumfang der Hülse 1 erstrecken. Sie können aber auch, wie aus Figur 3 hervorgeht, in zwei Klebeschichtabschnitte 2a und 2b und zwei Schutzfolienabschnitte 6a und 6b unterteilt sein, von denen die einen, nämlich der Klebeschichtabschnitt 2a und der zugehörige Schutzfolienabschnitt 6a, auf der dem Untergrund 3 zugewandten Seite der Hülse 1 angeordnet sind und die anderen, nämlich der Klebeschichtabschnitt 2b und der Schutzfolienabschnitt 6b, auf der der Dämmplatte 5 zugewandten Seite der Hülse 1 angeordnet sind. Dabei ist zweckmäßig der Klebeschichtabschnitt 2a dicker ausgebildet als der Klebeschichtabschnitt 2b, damit dieser besser am Untergrund 3 haftet, der z. B. eine raue Putzschicht sein kann. Der Klebeschichtabschnitt 2b kann demgegenüber dünner sein, weil er lediglich der immer gleichbleibend glatten Oberfläche 4 der Dämmplatte 5 haften muss.

Die Figur 4 zeigt, wie die Hülse 1 beim Einbau in ihren Kontaktbereich mit dem Untergrund 3 einerseits und der Dämmplatte 5 andererseits platt gedrückt worden ist, und zwar unter in Umfangsrichtung der Hülse 1 fortschreitender Vergrößerung der Klebeflächen. Das bedeutet im Umkehrschluss, dass die Hülse 1 nur unter Abreißen der bereits hergestellten Klebekontakte zwischen der Hülse 1 und dem Untergrund einerseits und der Dämmplatte 5 andererseits wieder zurückverformt werden kann. Diesem Abreißvorgang steht die hohe Klebekraft des Klebers entgegen, so dass im Ergebnis der durch Zusammendrücken der Hülse 1 einmal eingestellte Abstand zwischen Dämmplatte 5 und Untergrund 3 erhalten bleibt.

Die Figuren 5 und 6 zeigen perspektivisch die Dämmplatten 5 und die vorläufig aufgeklebten Fixierhilfen vor dem Aufbringen des Klebeschaums auf die Dämmplatten 5. Die in Figur 5 dargestellte Dämmplatte ist an gegenüberliegenden Rändern mit Nut/Feder-Verbindungen 7, 8 versehen, so dass Fixierhilfen nur in einem Randbereich der Dämmplatte 5 benötigt werden. Der gegenüberliegende Rand wird durch die Nut/Feder-Verbindung mit der zuvor eingebauten Dämmplatte in richtigem Abstand vom Untergrund 3 gehalten.

Die in Figur 6 dargestellte Dämmplatte 5 hat demgegenüber keine Nut/FederVerbindungen, sondern glatte Ränder, so dass hier an beiden gegenüberliegenden Rändern Fixierhilfen benötigt werden.

Die Figur 7 zeigt einen Ausschnitt aus dem fertig auf dem Untergrund 3 aufgebrachten Dämmsystem, bestehend aus Dämmplatten 5 mit einer Nut/Feder-Verbindung 7, 8, dem Ortschaum 9 (Klebeschaum) zwischen den Dämmplatten 5 und dem Untergrund 3 sowie Fixierhilfen jeweils bestehend aus einer teilweise platt gedrückten Hülse 1 mit Klebeschichten 2a und 2b.

Es sei davon ausgegangen, dass die in Figur 7 unten befindliche Dämmplatte 5 bereits fertig eingebaut ist und durch Aushärten des Ortschaums 9 fest installiert ist. Zum Einbau der nachfolgenden, darüber befindlichen Dämmplatte 5 ist diese zunächst mit Fixierhilfen 1, 2 versehen worden, wie in Figur 5 dargestellt. Sodann ist auf die Dämmplatten 5 Ortschaum 9 aufgebracht worden, und zwar in Form von Ortschaumraupen, die auf die Rückseite der Dämmplatte 5 aufgetragen sind. Zum Einbau ist die Dämmplatte 5 sodann mit ihrer Nut 7 auf die Feder 8 der bereits eingebauten Platte aufgesteckt worden und zugleich in Richtung des Pfeils 10 gegen den Untergrund angedrückt worden. Dabei sind einerseits die Raupen aus Ortschaum 9 und gleichzeitig die Fixierhilfen 1, 2 flach gedrückt worden, so dass sie die in Figur 7 erkennbare Form und Position einnehmen. In dieser Position wird die neu eingebaute Dämmplatte 5 belassen, bis der Ortschaum 9 ausgehärtet ist. Um während des Einbauvorgangs eine Nachrichtung in Richtung auf die Nut/Feder-Verbindung 7, 8 zu ermöglichen, verlaufen die Achsen der Fixierhilfen 1, 2 quer zur vorgesehenen Verschieberichtung. Falls eine andere Verschieberichtung beabsichtigt ist, können die Fixierhilfen 1, 2 auch anders orientiert werden, und zwar jeweils so , dass ihre Achsen jeweils quer zur vorgesehenen Verschieberichtung verlaufen.

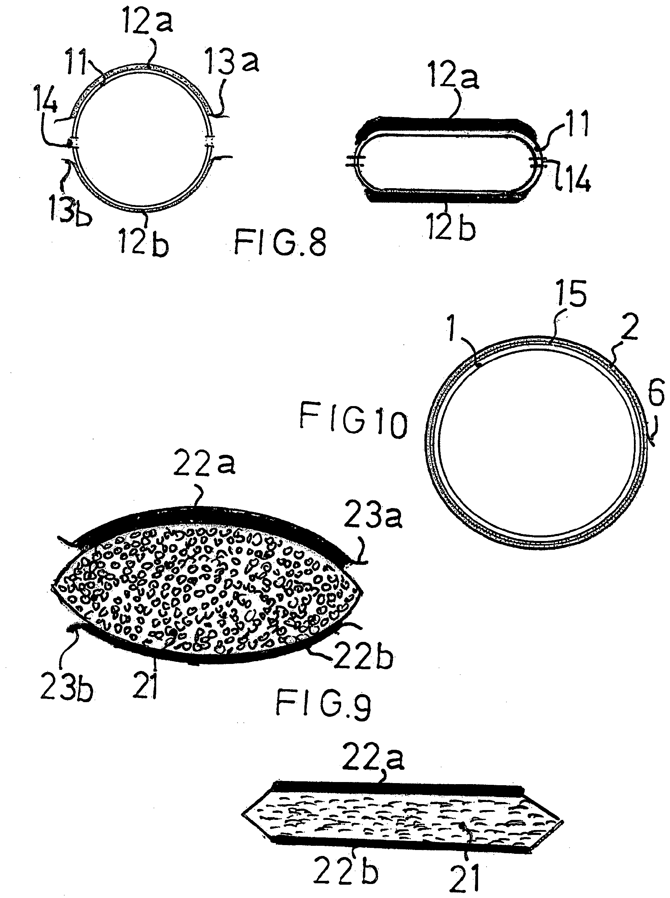

In Figur 8 ist eine als Fixierhilfe dienende Hohlkugel mit dem Bezugszeichen 11 bezeichnet. Die Hohlkugel 11 besteht ebenso wie die oben beschriebene Hülse 1 aus kalt verformbaren Material mit möglichst geringerem elastischen Rückstellvermögen. Die Hohlkugel 11 ist oben und unten mit Klebeschichten 12a und 12b beschichtet, die mit dem hier nicht dargestellten Untergrund und der ebenfalls nicht dargestellten Dämmplatte verklebt werden können. Zur temporären Abdeckung vor dem Einsatz dieser Fixierhilfe sind auch hier die Klebeschichten 12a und 12b mit abziehbaren Schutzfolien 13a und 13b abgedeckt. Damit die in der Hohlkugel 11 enthaltene Luft beim Zusammendrücken entweichen kann, sind seitlich in der Wand der Hohlkugel 11 Luftauslässe 14 vorgesehen.

In Figur 9 ist ein als Fixierhilfe dienendes Kissen aus Schaumstoff 21 dargestellt. Für dieses Schaumstoffkissen wird ein offenporiger komprimierbarer Schaum ohne Rückstellvermögen verwendet. Auch das Schaumstoffkissen ist oben und unten mit einer Klebeschicht 22a und 22b beschichtet, die temporär, d. h. vor dem Einbau der Fixierhilfe mit Schutzfolien 23a und 23b abgedeckt sind.

Die Verwendung der Fixierhilfen gemäß den Figuren 8 und 9 erfolgt analog zur Verwendung der eingangs erläuterten Hülsen 1, deren Ausgestaltung und Einbau ausführlich anhand der Figuren 1 bis 7 erläutert ist.

Figur 10 zeigt schließlich noch eine vorteilhafte Variante der in den Figuren 1 und 2 dargestellten Fixierhilfe. Bei dieser Variante ist in die Klebeschicht 2 ein die Hülse 1 umgebender unelastischer Metalldraht 15 eingebettet. Dieser Metalldraht 15 kann ggf. in den Verformungsbereichen der Hülse 1 gerafft ausgebildet sein. Bei der Verformung der Hülse 1 gerät dieser Metalldraht 15 unter Zugspannung, verlagert sich unter Einwirkung dieser Zugspannung in der Klebeschicht 2 und wird vom Klebstoff der Klebschicht 2 in der neuen Lage fixiert, derart, dass die Hülse 1 nur schwer in ihre Ursprungsform zurückkehren kann. Dieser Effekt wird noch verstärkt, wenn der Metalldraht 15 in den Verformungsbereichen der Hülse 1 gerafft ausgebildet ist. Dieser geraffte Bereich des unelastischen Metalldrahts 15 wird bei der Verformung der Hülse 1 in eine gestreckte Form gereckt und in dieser gereckten Gestalt in der Klebschicht 2 fixiert, derart, dass er nicht ohne Weiteres in seine geraffte Form zurückkehren kann. Auf diese Weise gelingt es doch besser, ungewollte Rückverformungen der Fixierhilfe zu verhindern.

## Patentansprüche

1. Dämmsystem für die Wärmedämmung einer Wand oder Decke im Innen-oder Außenbereich von bestehenden oder neuen Gebäuden mit mindestens einer Dämmplatte (5), die durch Ortschaum (9) mit dem Untergrund (3) verklebt ist, wobei zwischen dem Untergrund (3) und der Dämmplatte (5) mindestens eine Fixierhilfe vorgesehen ist, deren Körper (1, 11, 21) an seiner dem Untergrund (3) zugewandten Unterseite mit einer am Untergrund (3) haftenden Klebeschicht (2a, 12a, 22a) und an seiner der Dämmplatte (5) zugewandten, der besagten Unterseite gegenüberliegenden Oberseite mit einer an der Dämmplatte (5) haftenden Klebeschicht (2b, 12b, 22b) beschichtet ist, und wobei die Fixierhilfe die Dämmplatte (5) zumindest für die Dauer des Aushärtens des Ortschaums (9) mit Abstand zum Untergrund (3) fixiert,
**dadurch gekennzeichnet,**
**dass** der Körper (1, 11, 21) der Fixierhilfe zur Einstellung des Abstands zwischen Dämmplatte (5 und Untergrund (3) bleibend zusammendrückbar ausgebildet ist.

2. Dämmsystem nach Anspruch 1, **dadurch gekennzeichnet, dass** der Körper der Fixierhilfe als Hohlkörper (1, 11) ausgebildet ist, dessen Wand aus bleibend verformbaren Material besteht.

3. Dämmsystem nach Anspruch 2, **dadurch gekennzeichnet, dass** die Wand des Hohlkörpers (1, 11) aus einem weichgeglühten Metall, insbesondere aus weichgeglühtem Aluminium besteht.

4. Dämmsystem nach den Ansprüchen 2 oder 3, **dadurch gekennzeichnet, dass** die Wand des Hohlkörpers (1, 11) eine Wandstärke von 0,2 bis 2 mm insbesondere von 0,5 bis 1 mm hat.

5. Dämmsystem nach einem der Ansprüche 2 bis 4, **dadurch gekennzeichnet, dass** die bleibend verformbare Wand des Hohlkörpers (1, 11) zumindest im Bereich der Klebeschichten (2, 12) nach außen gewölbt ausgebildet ist.

6. Dämmsystem nach Anspruch 5, **dadurch gekennzeichnet, dass** der Hohlkörper als Hülse (1) ausgebildet ist, deren Achse im eingebauten Zustand parallel zum Untergrund und der Plattenebene verläuft.

7. Dämmsystem nach Anspruch 6, **dadurch gekennzeichnet, dass** der Querschnitt der Hülse (1) im noch nicht verformten Zustand kreisförmig ist.

8. Dämmsystem nach Anspruch 6, **dadurch gekennzeichnet, dass** der Querschnitt der Hülse im noch nicht verformten Zustand oval oder linsenförmig ist.

9. Dämmsystems nach Anspruch 5, **dadurch gekennzeichnet, dass** der Hohlkörper die Form einer Kugel (11) oder eines Kissens hat und seitlich mit Luftauslässen (14) versehen ist.

10. Dämmsystem nach Anspruch 1, **dadurch gekennzeichnet, dass** der zusammendrückbare Körper (21) der Fixierhilfe aus einem bleibend zusammendrückbaren Schaumstoff besteht.

11. Dämmsystem nach einem oder mehreren der Ansprüche 1 bis 10, **dadurch gekennzeichnet, dass** der Abstand der beiden Klebeschichten (2, 12, 22) 2 bis 6 cm, insbesondere 3 bis 5 cm beträgt.

12. Dämmsystem nach einem oder mehreren der Ansprüche 1 bis 11, **dadurch gekennzeichnet, dass** die Klebeschichten (2, 12, 22) als 0,2 mm bis 2 mm dicke Gelklebeschichten ausgebildet sind und jeweils von einer abziehbaren Schutzfolie (6, 13, 23) abgedeckt sind.

13. Dämmsystem nach Anspruch 12, **dadurch gekennzeichnet, dass** die Gelklebeschicht im Kontaktbereich mit dem Untergrund (3) dicker als im Kontaktbereich mit der Dämmplatte (5) ist.

14. Dämmsystem nach einem der Ansprüche 2 bis 8, **dadurch gekennzeichnet, dass** die Klebeschichten (2, 12, 22) den Körper (1, 11, 21) der Fixierhilfe ringsum umgeben und dass in diese den Körper (1, 11, 21) umgebenden Klebeschichten (2, 12, 22) mindestens ein den Körper umgebender, unelastischer Metalldraht (15) eingebettet ist.

15. Dämmsystem nach Anspruch 14, **dadurch gekennzeichnet, dass** der eingebettete Metalldraht (15) zumindest im Verformungsbereich des Körpers (1, 11, 21) gerafft ausgebildet ist.

16. Verfahren zur Herstellung eines Dämmsystems unter Verwendung von Fixierhilfen nach einem der Ansprüche 1 bis 15, **dadurch gekennzeichnet, dass** auf den Untergrund (3) und/oder die Rückseite der zu verklebenden Dämmplatte (5) eine zur Verklebung ausreichende Menge Ortschaum (9) aufgetragen wird, dass an dem Untergrund (3) und/oder der Rückseite der zu verklebenden Dämmplatte (5) mindestens eine Fixierhilfe angebracht wird und dass abschließend die Dämmplatte (5) unter Kompression der Fixierhilfe und unter Ausrichtung in die Einbaulage gegen den Untergrund (3) angedrückt wird und in dieser Position belassen wird, bis der Ortschaum (9) ausgehärtet ist.

17. Verfahren zur Herstellung eines Dämmsystems nach Anspruch 16 unter Verwendung von Fixierhilfen nach einem der Ansprüche 5 bis 7, **dadurch gekennzeichnet, dass** die als Fixierhilfen dienenden Hülsen (1) in einer solchen Position zwischen dem Untergrund (3) und der Dämmplatte (5) angeordnet werden, dass die Achsen der Hülsen (1) quer zur beabsichtigten Parallelverschiebung zwischen Dämmplatte (5) und Untergrund (3) verlaufen.

## Claims

1. Insulation system for the thermal insulation of a wall or ceiling in the interior or exterior region of existing or new buildings, having at least one insulation panel (5) which is adhesively bonded by means of in-situ foam (9) to the underlying surface (3), wherein, between the underlying surface (3) and the insulation panel (5), there is provided at least one fixing aid, the body (1, 11, 21) of which is coated, on its underside facing toward the underlying surface (3), with an adhesive layer (2a, 12a, 22a) which adheres to the underlying surface (3), and on its top side facing toward the insulation panel (5) and situated opposite said underside, with an adhesive layer (2b, 12b, 22b) which adheres to the insulation panel (5), and wherein the fixing aid fixes the insulation panel (5) spaced apart from the underlying surface (3) at least for the duration of the curing of the in-situ foam (9),
**characterized**
**in that** the body (1, 11, 21) of the fixing aid is designed to be permanently compressible for the purposes of setting the spacing between the insulation panel (5) and underlying surface (3).

2. Insulation system according to Claim 1, **characterized in that** the body of the fixing aid is formed as a hollow body (1, 11), the wall of which is composed of permanently deformable material.

3. Insulation system according to Claim 2, **characterized in that** the wall of the hollow body (1, 11) is composed of a soft-annealed metal, in particular of soft-annealed aluminium.

4. Insulation system according to Claims 2 or 3, **characterized in that** the wall of the hollow body (1, 11) has a wall thickness of 0.2 to 2 mm, in particular of 0.5 to 1 mm.

5. Insulation system according to one of Claims 2 to 4, **characterized in that** the permanently deformable wall of the hollow body (1, 11) is of outwardly domed design at least in the region of the adhesive layers (2, 12).

6. Insulation system according to Claim 5, **characterized in that** the hollow body is formed as a sleeve (1), the axis of which runs, in the installed state, parallel to the underlying surface and to the panel plane.

7. Insulation system according to Claim 6, **characterized in that** the cross section of the sleeve (1) is circular in the state in which it has not yet been deformed.

8. Insulation system according to Claim 6, **characterized in that** the cross section of the sleeve is oval or lenticular in the state in which it has not yet been deformed.

9. Insulation system according to Claim 5, **characterized in that** the hollow body has the shape of a sphere (11) or of a cushion and is equipped laterally with air outlets (14).

10. Insulation system according to Claim 1, **characterized in that** the compressible body (21) of the fixing aid is composed of a permanently compressible foamed material.

11. Insulation system according to one or more of Claims 1 to 10, **characterized in that** the spacing of the two adhesive layers (2, 12, 22) amounts to 2 to 6 cm, in particular 3 to 5 cm.

12. Insulation system according to one or more of Claims 1 to 11, **characterized in that** the adhesive layers (2, 12, 22) are formed as gel adhesive layers with a thickness of 0.2 mm to 2 mm, and are each covered by a removable protective foil (6, 13, 23).

13. Insulation system according to Claim 12, **characterized in that** the gel adhesive layer is thicker in the contact region with the underlying surface (3) than in the contact region with the insulation panel (5) .

14. Insulation system according to one of Claims 2 to 8, **characterized in that** the adhesive layers (2, 12, 22) surround the body (1, 11, 21) of the fixing aid in encircling fashion, and **in that** at least one inelastic metal wire (15) which surrounds the body is embedded into said adhesive layers (2, 12, 22) surrounding the body (1, 11, 21).

15. Insulation system according to Claim 14, **characterized in that** the embedded metal wire (15) is gathered at least in the deformation region of the body (1, 11, 21).

16. Method for producing an insulation system using fixing aids according to one of Claims 1 to 15, **characterized in that**, to the underlying surface (3) and/or to the rear side of the insulation panel (5) to be adhesively bonded, there is applied a quantity of in-situ foam (9) sufficient for the adhesive bonding, **in that** at least one fixing aid is attached to the underlying surface (3) and/or to the rear side of the insulation panel (5) to be adhesively bonded, and **in that**, finally, the insulation panel (5) is pressed against the underlying surface (3), with the fixing aid being compressed and said insulation panel being aligned into the installation position, and is left in said position until the in-situ foam (9) has cured.

17. Method for producing an insulation system according to Claim 16 using fixing aids according to one of Claims 5 to 7, **characterized in that** the sleeves (1) which serve as fixing aids are arranged in such a position between the underlying surface (3) and the insulation panel (5) that the axes of the sleeves (1) run transversely with respect to the intended parallel displacement between insulation panel (5) and underlying surface (3).

## Revendications

1. Système d'isolation pour l'isolation thermique d'un mur ou d'un plafond dans la région intérieure ou extérieure de bâtiments existants ou de nouveaux bâtiments, comprenant au moins une plaque d'isolation (5) qui est collée au subjectile (3) par de la mousse projetée in situ (9), au moins un auxiliaire de fixation étant prévu entre le subjectile (3) et la plaque d'isolation (5), dont le corps (1, 11, 21) est revêtu, au niveau de son côté inférieur tourné vers le subjectile (3), d'une couche de colle (2a, 12a, 22a) adhérant au subjectile (3), et au niveau de son côté supérieur opposé audit côté inférieur, tourné vers la plaque d'isolation (5), d'une couche de colle (2b, 12b, 22b) adhérant à la plaque d'isolation (5), et l'auxiliaire de fixation fixant la plaque d'isolation (5) à distance du subjectile (3) au moins pendant la durée du durcissement de la mousse projetée in situ (9),
**caractérisé en ce que**
le corps (1, 11, 21) de l'auxiliaire de fixation est réalisé de manière à pouvoir être comprimé de manière permanente pour ajuster la distance entre la plaque d'isolation (5) et le subjectile (3).

2. Système d'isolation selon la revendication 1, **caractérisé en ce que** le corps de l'auxiliaire de fixation est réalisé sous forme de corps creux (1, 11) dont la paroi se compose d'un matériau déformable de manière permanente.

3. Système d'isolation selon la revendication 2, **caractérisé en ce que** la paroi du corps creux (1, 11) se compose d'un métal recuit, en particulier d'aluminium recuit.

4. Système d'isolation selon les revendications 2 ou 3, **caractérisé en ce que** la paroi du corps creux (1, 11) présente une épaisseur de paroi de 0,2 à 2 mm, en particulier de 0,5 à 1 mm.

5. Système d'isolation selon l'une quelconque des revendications 2 à 4, **caractérisé en ce que** la paroi déformable de manière permanente du corps creux (1, 11) est réalisée de manière cintrée vers l'extérieur au moins dans la région des couches de colle (2, 12).

6. Système d'isolation selon la revendication 5, **caractérisé en ce que** le corps creux est réalisé sous forme de douille (1) dont l'axe s'étend, dans l'état installé, parallèlement au subjectile et au plan de la plaque.

7. Système d'isolation selon la revendication 6, **caractérisé en ce que** la section transversale de la douille (1), dans l'état non encore déformé, est circulaire.

8. Système d'isolation selon la revendication 6, **caractérisé en ce que** la section transversale de la douille, dans l'état non encore déformé, est ovale ou en forme de lentille.

9. Système d'isolation selon la revendication 5, **caractérisé en ce que** le corps creux présente la forme d'une sphère (11) ou d'un coussin et est pourvu latéralement de sorties d'air (14).

10. Système d'isolation selon la revendication 1, **caractérisé en ce que** le corps compressible (21) de l'auxiliaire de fixation se compose d'une mousse compressible de manière permanente.

11. Système d'isolation selon l'une quelconque ou plusieurs des revendications 1 à 10, **caractérisé en ce que** la distance entre les deux couches de colle (2, 12, 22) est de 2 à 6 cm, en particulier de 3 à 5 cm.

12. Système d'isolation selon l'une quelconque ou plusieurs des revendications 1 à 11, **caractérisé en ce que** les couches de colle (2, 12, 22) sont réalisées sous forme de couches de colle sous forme de gel d'une épaisseur de 0,2 mm à 2 mm et sont chacune revêtues d'un film de protection pelable (6, 13, 23).

13. Système d'isolation selon la revendication 12, **caractérisé en ce que** la couche de colle sous forme de gel est plus épaisse dans la région de contact avec le subjectile (3) que dans la région de contact avec la plaque d'isolation (5).

14. Système d'isolation selon l'une quelconque des revendications 2 à 8, **caractérisé en ce que** les couches de colle (2, 12, 22) entourent le corps (1, 11, 21) de l'auxiliaire de fixation tout autour et **en ce que** dans ces couches de colle (2, 12, 22) entourant le corps (1, 11, 21) est incorporé au moins un fil métallique non élastique (15) entourant le corps.

15. Système d'isolation selon la revendication 14, **caractérisé en ce que** le fil métallique incorporé (15) est réalisé sous forme plissée au moins dans la région de déformation du corps (1, 11, 21).

16. Procédé de fabrication d'un système d'isolation utilisant des auxiliaires de fixation selon l'une quelconque des revendications 1 à 15, **caractérisé en ce qu'**une quantité de mousse projetée in situ (9), suffisante pour le collage, est appliquée sur le subjectile (3) et/ou sur le côté arrière de la plaque d'isolation (5) à coller, **en ce qu'**au moins un auxiliaire de fixation est appliqué sur le subjectile (3) et/ou sur le côté arrière de la plaque d'isolation (5) à coller et **en ce que** la plaque d'isolation (5) est ensuite pressée contre le subjectile (3) par compression de l'auxiliaire de fixation et orientation dans la position d'installation, et est laissée dans cette position jusqu'au durcissement de la mousse projetée in situ (9).

17. Procédé de fabrication d'un système d'isolation selon la revendication 16, utilisant des auxiliaires de fixation selon l'une quelconque des revendications 5 à 7, **caractérisé en ce que** les douilles (1) servant d'auxiliaires de fixation sont disposées entre le subjectile (3) et la plaque d'isolation (5) dans une position telle que les axes des douilles (1) s'étendent transversalement au déplacement parallèle envisagé entre la plaque d'isolation (5) et le subjectile (3) .
